(19) **Europäisches Patentamt**
**European Patent Office**
**Office européen des brevets**

(11) **EP 2 043 091 B1**

(12) **EUROPEAN PATENT SPECIFICATION**

(45) Date of publication and mention
of the grant of the patent:
**03.07.2013 Bulletin 2013/27**

(51) Int Cl.:
*G11B 7/005* (2006.01)
*G11B 7/007* (2006.01)
*G11B 20/10* (2006.01)
*G11B 7/24* (2013.01)

(21) Application number: **08016802.4**

(22) Date of filing: **24.09.2008**

(54) **Optical information reproducing method and apparatus, and optical information recording medium**

Methode und Vorrichtung zur Wiedergabe optischer Informationen und optisches Informationsaufzeichnungsmedium.

Mèthode et l'appareil pour lire une information optique ainsi que le support d'enregistrement d'information optique

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.09.2007 JP 2007253034**

(43) Date of publication of application:
**01.04.2009 Bulletin 2009/14**

(73) Proprietor: **Hitachi Ltd.**
**Chiyoda-ku**
**Tokyo 100-8280 (JP)**

(72) Inventors:
• **Ushiyama, Junko**
**Chiyoda-ku**
**Tokyo 100-8220 (JP)**
• **Kurokawa, Takahiro**
**Chiyoda-ku**
**Tokyo 100-8220 (JP)**

• **Kikugawa, Atsushi**
**Chiyoda-ku**
**Tokyo 100-8220 (JP)**
• **Minemura, Hiroyuki**
**Chiyoda-ku**
**Tokyo 100-8220 (JP)**
• **Miyamoto, Harukazu**
**Chiyoda-ku**
**Tokyo 100-8220 (JP)**

(74) Representative: **Strehl Schübel-Hopf & Partner**
**Maximilianstrasse 54**
**80538 München (DE)**

(56) References cited:
**EP-A- 1 653 454        WO-A-2005/109431**
**US-A1- 2005 099 935        US-A1- 2006 072 434**
**US-A1- 2006 087 937**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates to an optical information reproducing apparatus and method for recording or reproducing information on an optical recording medium.

2. Description of the Related Art

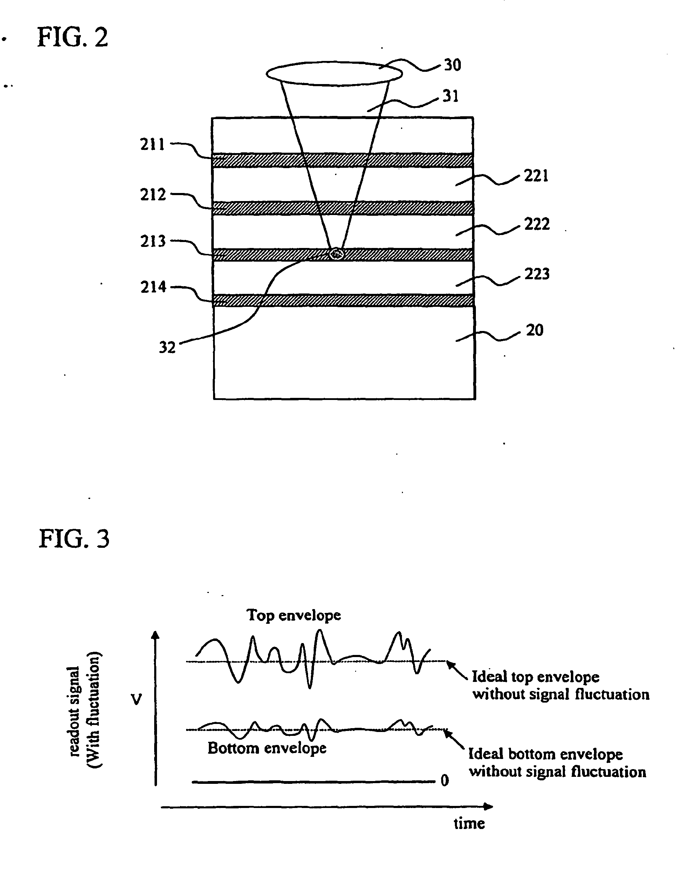

Fig. 2 illustrates in schematic form a cross-sectional configuration of a heretofore known multilayer optical disc and the principle of selective reproduction of information on information-recordable or information-bearing information layers. Fig. 2 shows an optical head, only a part of the objective lens. In this conventional example of the multilayer optical disc, an information recording medium includes plural information layers, that is, a total of four information layers consisting of a first information layer 211, a second information layer 212, a third information layer 213 and a fourth information layer 214, and thus will be hereinafter called a "four-layer medium." With the use of the four-layer medium, access to recorded information on the third information layer 213, for example, involves controlling the position of an objective lens 30, thereby positioning a light spot 32 on the third information layer 213. On this occasion, a converging ray 31 is focused through the objective lens 30 and passes through the translucent first and second information layers 211 and 212 before reaching the third information layer 213. However, the converging ray 31 does not act to resolve and thereby reproduce recorded information on the translucent first and second information layers 211 and 212 since a beam diameter of the converging rays 31 on the first and second information layers is sufficiently larger than the diameter of the light spot 32 on the third information layer 213. In this manner, reproduction of information on the third information layer located on the farther side, as viewed from a light source, than the first and second information layers is achieved without being affected by the first and second information layers.

Likewise, the reproduction of information on the fourth information layer 214 involves controlling the position of the objective lens 30, thereby positioning the light spot 32 on the fourth information layer 214. Here, the beam diameter on the layer (hereinafter called an "adjacent layer") adjacent to the layer targeted for reproduction is given by the following equation:

$$L * NA/(1 - NA^2)^{(1/2)},$$

where L represents a gap between the layers; NA, the numerical aperture of the objective lens; and $\lambda$, the wavelength of light. Letting L be 5 $\mu$m and NA be 0.85, for example, yields a beam diameter of 8 $\mu$m on the adjacent layer. This beam diameter of 8 $\mu$m is about a diameter 17-times larger and has about an area 300-times larger than the diameter of the light spot 32 on the target layer, $\lambda/NA$ = 470 $nm$, which is observed when the wavelength $\lambda$ is set equal to 400 nm. Japanese Unexamined Patent Application Publication No. Hei 5-101398 (hereinafter referred to as Patent Literature 1) gives a description of details on conditions of recording and reproduction on an optical recording medium having plural information layers, which take place without being affected by other layers in the manner as above mentioned.

Japanese Patent Application Publication No. Hei 11-016208 gives a disclosure as to how to design the reflectance and transmittance of the information layers of the multilayer optical disc as mentioned above. Specifically, a multilayer information recording medium having a stacked construction of three or more information layers is designed such that $R_n$, $a_n$ and $R_{n-1}$ can satisfy the relationship defined by the following expression:

$$R_{n-1} \approx R_n \times (1 - a_{n-1} - R_{n-1})^2$$

where $R_n$ and $a_n$ denote the reflectance and absorbance, respectively, of the $n$-th

information layer from the incoming-side layer which read light from the optical head enters and $R_{n-1}$ denotes the reflectance of the ($n$-1)th information layer. Since (1-$a_{n-1}$ - $R_{n-1}$) indicates the transmittance of the ($n$-1)th layer, the above expression determines that the quantity of light reflected from the ($n$-1)th layer will be approximately equal to the quantity of light that travels through the ($n$-1)th layer, bounces off the n-th layer and further travels back through the ($n$-1)th layer toward the optical head. In other words, the medium is designed such that all layers have approximately equal effective reflectance for light to exit from the optical head to the layers and return to the optical head. Specifically, the medium is designed so that a layer located on the far side, as viewed from the light incoming side, has high reflectance to thereby compensate attenuation of light intensity caused by reflection and absorption by a layer located on the near side. Japanese Patent Application Publication No. 2005-38463 discloses that the information layer located farther away from the light entrance surface has greater layer thickness, so that the quantities of light reflected from the information layers become approximately equal, and that the refractive index of a disc sheet is set substantially equal to that of a bonding layer.

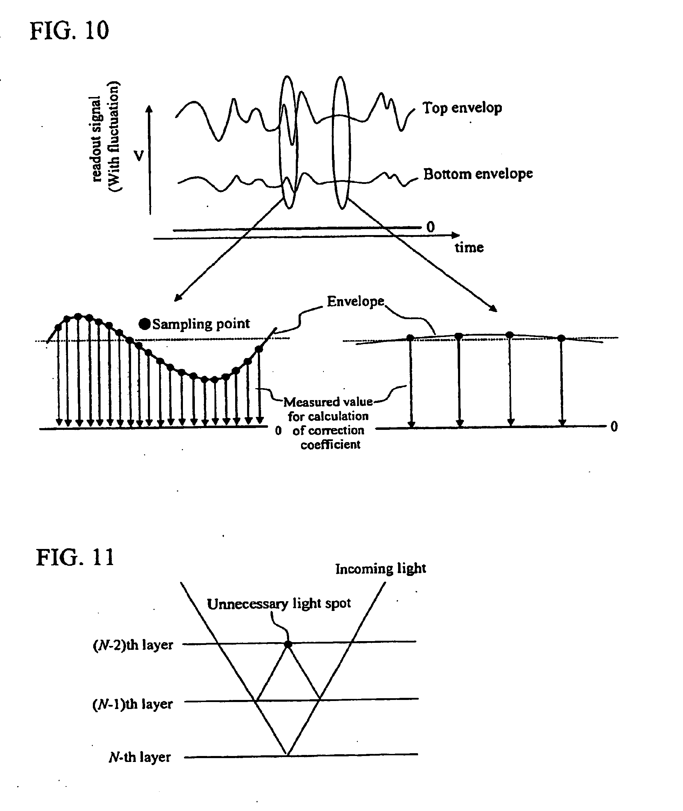

A design method for the medium of multilayer structure as mentioned above takes into account the effect of the attenuation of light through a near-side layer located between a target layer for recording or reproduction and the light incident surface of the medium, but does not take into account the influence of repeated reflections of light, or equivalently, what is termed as multiple reflections of light, in the near-side layer. Description will be given with reference to Fig. 11 with regard to a situation where multiple-reflected light causes a problem. Assume that the target layer for reproduction is the $n$-th layer and that the $n$-th layer is irradiated at the top with light, as shown in Fig. 11. At this time, the light reflected from the $(n-1)$th layer immediately preceding the target layer travels as unwanted light to the upper side (nearer side to the light source) of the $(n-2)$th layer. Then, the unwanted light reflected from the upper side of the $(n-2)$th layer again bounces off the $(n-1)$th layer to travel back toward the optical head along substantially the same path as that of reflected light from the n-th layer, resulting in the occurrence of crosstalk of great magnitude. The unwanted light returning to the optical head as mentioned above presents a large problem.

Firstly, the unwanted light converges on the $(n-2)$th layer to form a ghost spot, and thus permits optical resolution of information on the $(n-2)$th layer. Hence, the unwanted light causes unwanted signals having a band overlapping the band of general readout signals, and even worse the unwanted signals are inseparable from the general signals. Secondly, the returned light of the unwanted light travels back to the optical head along substantially the same path as that of the reflected light from the $n$-th layer and thus likewise travels through the optical head along the same optical path. As a result, both kinds of light are brought into complete coincidence on a detector. Thirdly, the incapability of light separation on the detector also constitutes a factor that renders difficult the quantitative evaluation of the amount of crosstalk caused by the unwanted light.

The problem of the influence of the multiple-reflected unwanted light, namely, the crosstalk, as mentioned above, results from substantially the same distance between the layers. Accordingly, the approach of varying the distance between the layers is disclosed for example in Japanese Patent Application Publication No. 2004-213720 or Japanese Journal of Applied Physics, Vol. 43, No. 7B, 2004, pp. 4983-4986. In the latter instance, four layers are spaced 15 $\mu$m, 17 $\mu$m, and 13 $\mu$m apart from each other, or in other words, the thicknesses of three spacer layers are set to 15 $\mu$m, 17 $\mu$m, and 13 $\mu$m, respectively, so as to prevent the multiple-reflected unwanted light from returning along the same path as that of the wanted reflected light. In this instance, the spacer layers having the same optical constant are used to vary the thickness and thereby vary the distance between the layers. However, this approach has the problem that the influence of the unwanted light is likely to remain because a mere difference on the order of 2 $\mu$m in the distance between the layers results in a small difference between the size of the light spot of the unwanted light and that of the originally desired light spot. In addition, a deviation on the order of only 1 $\mu$m of the distance between the layers due to manufacturing variations or the like may cause a sharp increase in the crosstalk due to the unwanted light. Conversely, there is a need to manufacture a very-high-precision medium with suppressed variations, which in turn leads to an increase in the cost of manufacture of the medium. Still another problem is that the distance between the layers has to be greater than that for a general two-layer medium in order to achieve a low margin of interlayer crosstalk, which in turn makes it difficult to increase the number of layers.

SUMMARY OF THE INVENTION

Desirably, the medium is contrived to eliminate the crosstalk due to the unwanted light, because it is difficult to separate signal light from the crosstalk due to the unwanted light by use of the detector, as mentioned above. However, since manufacturing variations inevitably occur in mass production, the crosstalk caused by the unwanted light cannot be completely eliminated. Instead, a reproducing apparatus and method adapted to eliminate distortion of the readout signal due to the interlayer crosstalk are disclosed for example in Japanese Patent Application Publication No. 2006-120291 (hereinafter referred to as Patent Literature 5) as a method for overcoming the crosstalk by use of the apparatus. In this instance, the method involves sampling a top envelope signal of the readout signal, and performing gain control on the readout signal containing DC components so that the top envelope signal can be substantially constant. This method is effective in suppressing crosstalk components of lower frequencies than the frequency of the readout signal, as described in the paragraph [0027] of Patent Literature 5. Because of performing the gain control directly on the envelope signal during reproduction, the gain control can possibly become unstable while controlling signal fluctuations due to components other than interlayer leakage. Hence, this method may fail to treat signal distortion in a band of high frequencies in particular. Further, US 2006/087937 A1 discloses:

An optical information reproducing method (and apparatus) for reproducing information by irradiating a light beam onto a disc-shaped optical information recording medium having a plurality of information layers comprising the steps of:

> detecting a readout signal reproduced with the light beam focused on a predetermined track of one of the plurality of information layers, the readout signal being affected by fluctuation caused by interlayer crosstalk;
> storing the readout signal;
> detecting and sampling an envelope of the readout signal;
> calculating, from the sampled top or bottom envelope signal, correction coefficients; and
> correcting the fluctuation caused by interlayer crosstalk of the sampled top or bottom envelope signal.

The present invention offers a solution to the foregoing problems by adopting a constitution as given in the appended claims.

The magnitude of the interlayer crosstalk, which is problematic for reproducing the information on a multilayer optical information recording medium, changes according to a distance between the information layers, a so-called interlayer distance. The interlayer distance depends not only on the physical thickness of the spacer layer interposed between the information layers, but also on the optical distance of the spacer layer. Here, the optical distance of the spacer layer may change even with the substantially same physical thickness due to a partial difference in an optical constant of the spacer layer.

It has been found out that if the thickness of the spacer layer formed by spin coating varies around a track, the tendency of variation is substantially the same in a radial direction, and as a result, the tendency of variation in the readout signal caused by the interlayer crosstalk is likewise substantially the same in the radial direction. Accordingly, a variation level of the readout signal on a predetermined track is stored, the correction coefficient is calculated based on a predetermined set frequency so that the readout signal is substantially fixed, the readout signal in a preset area is calculated using the calculated correction coefficient, and thereby, the variation in the readout signal caused by the interlayer crosstalk is corrected. The capture of the readout signal for calculation of the correction coefficient is done at predetermined intervals in the radial direction of the optical information recording medium.

As employed herein, "the readout signal is substantially constant" means that the readout signal fluctuates within a range of 5%. Fluctuations of the readout signal beyond the range of 5% cause a rise in error rate or an increase in jitter, thus leading to deterioration in the performance capability of reproduction. Preferably, therefore, the readout signal fluctuates within the range of 5%, and thus, the condition that the rate of fluctuation of the readout signal falls within the range of 5% is set as the condition for rendering the readout signal substantially constant.

The correction coefficient is used for signal fluctuation correction within a preset radius (or equivalently, a distance from the center of a disc). The above-mentioned preset area may be the area within any one of the inner radius and outer radius of the track or alternatively the area around the track, provided that the area is a predetermined area containing the track bearing the readout signal captured for the calculation of the correction coefficient. Setting the area around the track enables achieving the advantageous effect of reducing the influence of the dependence of the thickness of the spacer layer upon the radius.

The correction coefficient may be calculated from readout signals on plural adjacent tracks. In this case, the method may include calculating each correction coefficient of the readout signals on the plural adjacent tracks; averaging the plural correction coefficients; and performing computing on the readout signal by use of the average correction coefficient, thereby correcting the fluctuation of the readout signal. Also, the method may include producing a virtual readout signal by averaging the readout signals on the plural adjacent tracks; and calculating the correction coefficient from the virtual readout signal.

The correction coefficient for rendering the readout signal fluctuation substantially constant will conveniently be calculated by setting constant a frequency for the correction coefficient. For a reduction in storage memory capacity, however, it is preferable that the correction coefficient be calculated by varying a set frequency for the correction coefficient according to the magnitude of fluctuation of the readout signal per unit time, such as by setting high frequency for the correction coefficient in an area of a round of track where the readout signal fluctuates greatly, while setting low frequency in an area where the readout signal does not fluctuate.

Preferably, the readout signal captured for calculation of the correction coefficient is the readout signal in an unrecorded area that does not bear information. The reason is as follows although the envelope signal is obtained on an information-bearing track, signal components such as 3T and 4T are not contained in an unrecorded track bearing no information, and therefore, the unrecorded track enables more precise sampling of fluctuation components due to the interlayer crosstalk.

Further, the stored correction coefficient is stored in conjunction with information such as a position on the disc (e.g., a radial position) in which then correction coefficient is calculated, and, for plural reproductions, the correction coefficient calculated and stored in advance is used for readout signal fluctuation correction. This enables achieving the advantageous effect of being able to reduce time for the capture of the readout signal for the readout signal fluctuation correction and the calculation of the correction coefficient and also being able to achieve power savings.

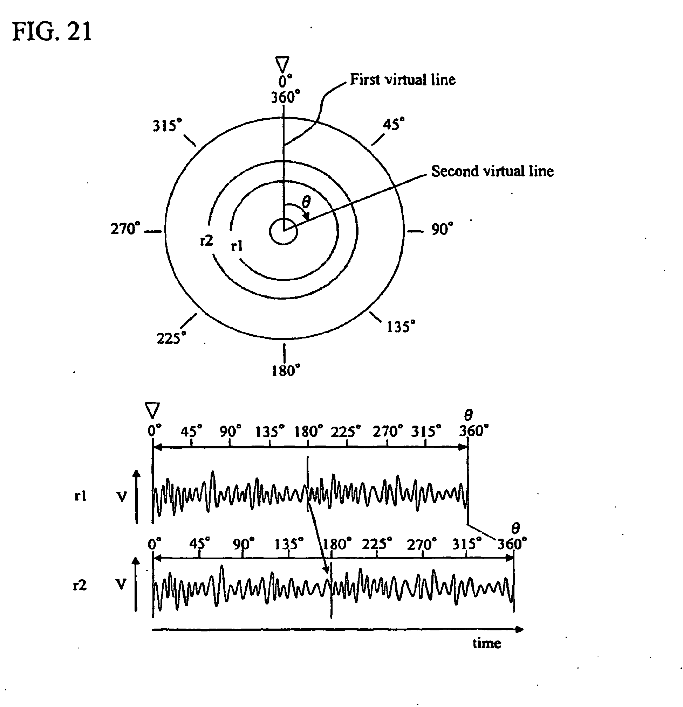

Further, the readout signal on a round of disc may be used as a unit for the capture of the readout signal and the calculation of the correction coefficient. For constant linear velocity reproduction, reproduction time for the readout signal at an outer radius r2 is longer than that for the readout signal at an inner radius r1, as shown in Fig. 21. If the thickness of the spacer layer formed by means of spin coating varies track by track, the trend of thickness variation and consequently, the trend of readout signal fluctuation caused by the interlayer crosstalk is substantially the same in the radial direction. Thus, if the radial positions of execution of the calculation of the correction coefficient and the readout signal correction are different, it is desirable that the correction be provided in correspondence with an angle from a given position, or equivalently, a circumferential position, rather than in correspondence with the reproduction time from the given position. For example, it is necessary that the correction coefficient calculated at a 180-degree position at the radius r1 be likewise used at the 180-degree position at the radius r2 (in this instance, the reproduction times from the given position (e.g., a 0-degree position shown in Fig. 21) at the radius r1 and the radius r2 are different).

In other words, if the correction coefficient is stored simply in correspondence with only the reproduction time from the given position, accurate correction is difficult for correction in a different radial position. For the calculation of the correction coefficient and the signal correction, therefore, the correction coefficient is stored in correspondence with the angle from the given position (marked with a triangle in Fig. 21), or equivalently, the circumferential position, rather than in correspondence with the reproduction time. Specifically, an angle θ between first and second virtual lines, starting at a point on the first virtual line and ending on the second virtual line, as shown in Fig. 21, is brought into correspondence with the correction coefficients in circumferential positions. The circumferential position will conveniently be stored utilizing as a trigger a disc rotation synchronizing signal such as a spindle index.

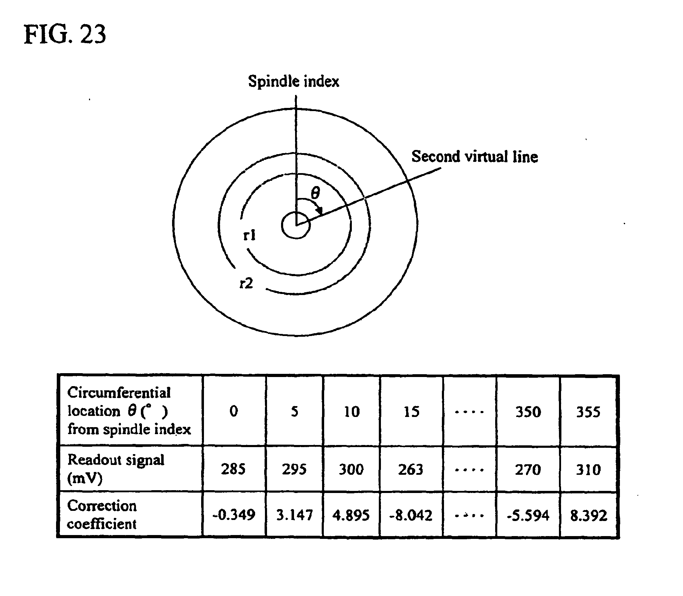

Referring to Fig. 23, there is shown an example of a table containing the correspondence between the correction coefficient and circumferential positional information, as an example of a method for calculating the correction coefficient. The correction coefficient shown in Fig. 23 is represented as a value calculated based on the following relational equation:

$$\text{Compensation coefficient} = \frac{\text{the value of the read signal in the given location} - a}{a} \times 100$$

where a denotes the average value of the sampled readout signal. As shown in Fig. 23, a drive may store the correction coefficient in correspondence with the circumferential position (i.e., the angle θ) from the spindle index. Also, although the correction coefficient is calculated by the above operation expression, it is to be understood that the equation for the calculation of the correction coefficient, as given herein, is only illustrative and is not intended to limit the scope of the invention.

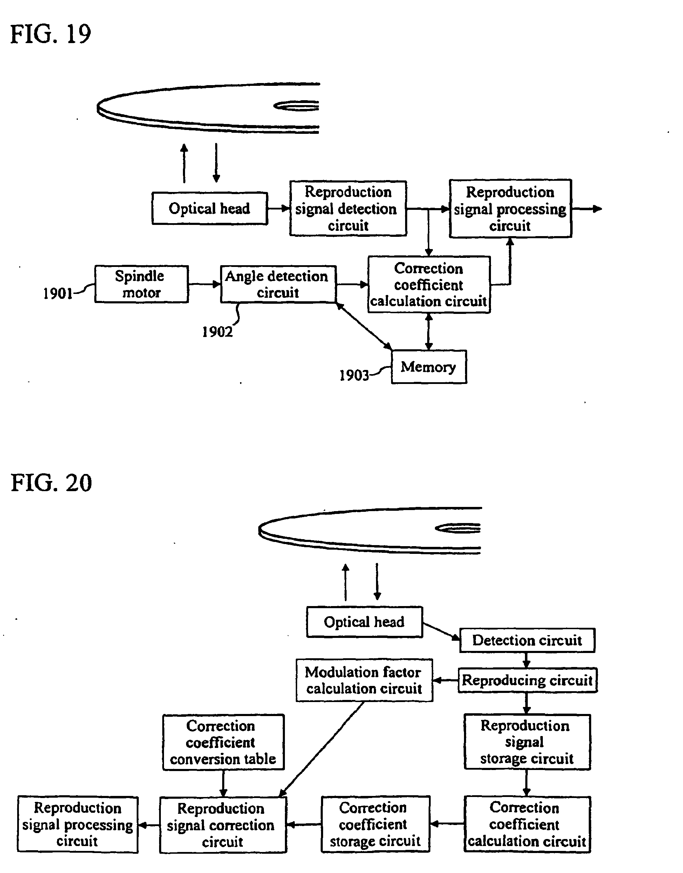

Also, in the optical information reproducing method of the present invention, the correction of the fluctuation of the readout signal may include calculating a modulation of the readout signal targeted for correction, and correcting fluctuations of top and bottom envelopes of the readout signal targeted for correction, using a correction coefficient conversion table prepared beforehand within the drive, as shown in Fig. 20. The modulation, as employed herein, is expressed by the following equation.

$$\text{Modulation factor} = \frac{\text{Top envelope voltage value} - \text{Bottom envelope voltage value}}{\text{Top envelope voltage value}}$$

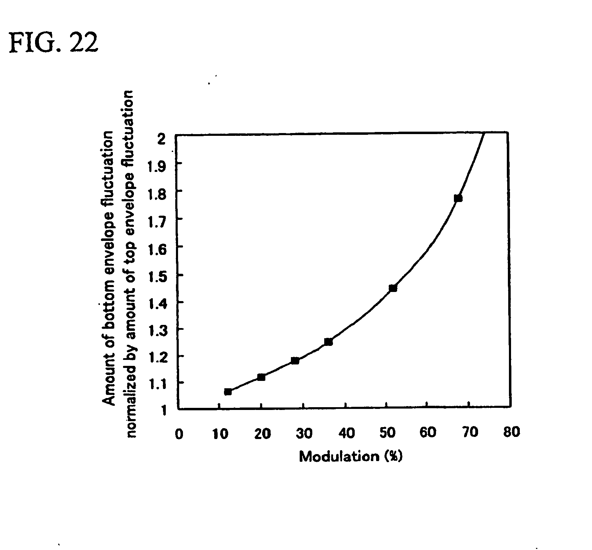

As a result of examination, it has been shown that a relationship as shown in Fig. 22 exists between the amount of fluctuation of the top envelope of the readout signal and that of the bottom envelope thereof. The correction coefficient conversion table is the table in which the relationship shown in Fig. 22 takes numerical form. For example, if correction is provided to the readout signal having a modulation of 52%, the amount of fluctuation of the bottom envelope is of magnitude 1.44 times that of the amount of fluctuation of the top envelope. Utilization of this relationship is effective for time reduction because of eliminating the need to calculate and store the respective correction coefficients for the top and bottom envelopes. Of course, it will be understood that an approach may be adopted which involves capturing the respective fluctuations of the top and bottom envelopes and calculating and storing the respective correction coefficients therefor. At the occurrence of some warpage in an optical head, the relationship between the respective fluctuations of top and bottom envelopes may differ from that shown in Fig. 22. Accordingly, the use of the respective correction coefficients calculated for the top and bottom envelopes may possibly achieve more accurate correction.

For the calculation of the correction coefficient, the calculation of the correction coefficient may include detection of readout signal fluctuation, using a readout signal processing circuit included in the drive beforehand. The readout signal processing circuit is any one of an AGC (automatic gain control) circuit, an automatic slicer circuit, a PRML (partial response most-likely) circuit, and the like. These circuits have the function of suppressing the readout signal fluctuation.

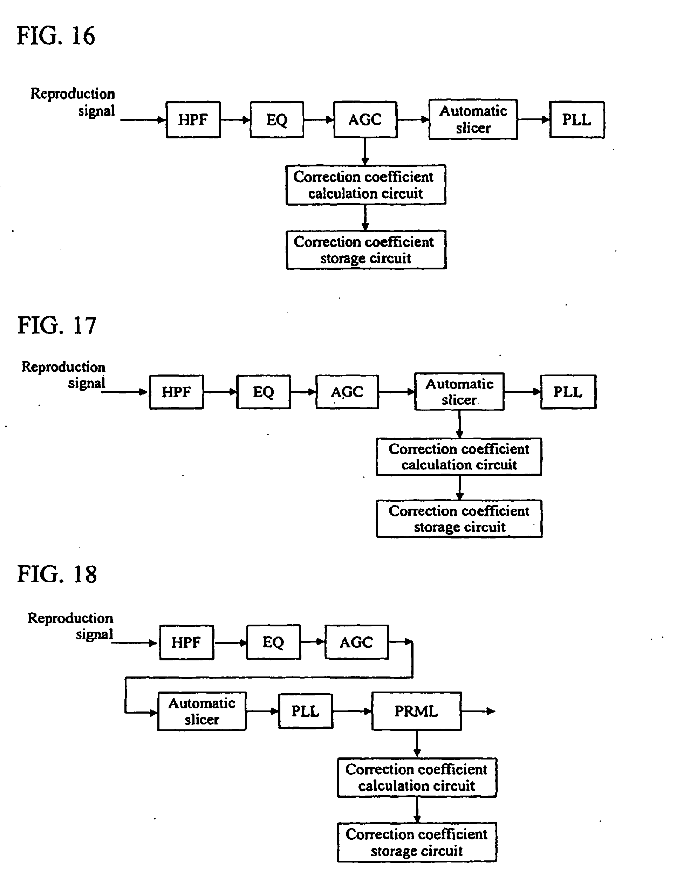

The configuration of a reproducing circuit in which the AGC circuit is used for the detection of the readout signal fluctuation is shown as an example in Fig. 16. In processing blocks shown in Fig. 16, a high-pass filter (HPF) eliminates low-frequency fluctuation components of the readout signal, and an equalizer (EQ) eliminates high-frequency noise components of the readout signal and also performs waveform equalization so as to achieve predetermined frequency characteristics. The AGC performs variable gain control so that the readout signal has predetermined amplitude. At this point, the AGC detects the envelope of the readout signal, and feeds the detected envelope signal as a control signal back to the variable gain of an amplitude amplifier to thereby maintain the amplitude of the readout signal constant. A control band of the AGC is several kilohertz for a general readout signal, and thus the detected envelope signal contains components within several kilohertz of the readout signal that fluctuates due to the interlayer crosstalk. Then, the above-mentioned correction coefficient can be obtained from this signal. A correction coefficient calculation circuit calculates the correction coefficient from the detected envelope signal, and a correction coefficient recording circuit holds the calculated correction coefficient. Also, the automatic slicer performs binarization on the readout signal controlled in amplitude by the AGC. The automatic slicer of duty feedback type performs variable control on a binary decision level so that a mark portion and a space portion of the readout signal are equal in duty ratio. A PLL (phase-locked loop) generates a reproduction reference clock from the binary readout signal.

As shown in Fig. 17, the automatic slicer circuit may be used for the calculation of the correction coefficient, as in the case of the AGC circuit. In processing blocks shown in Fig. 17, a binary decision level signal from the automatic slicer is used for the calculation of the correction coefficient. The automatic slicer circuit of the duty feedback type performs variable control on the binary decision level so that the mark portion and the space portion of the readout signal are equal in duty ratio, to thereby accommodate signal level fluctuations or asymmetric variations during the binarization of the readout signal. Thus, variations in the binary decision level can be utilized for the calculation of the correction coefficient, as in the case of the AGC circuit mentioned above. The binary decision level is generated, for example, by integrating a difference signal between the binary signal and the inverted signal with respect to a predetermined time constant. Other flows of signal processing are the same as those in the processing blocks shown in Fig. 16.

The PRML circuit having the function of adaptive target correction causes a reference level (or a target level) for Viterbi decoding to follow the readout signal, by means of an algorithm for least squares, so as to minimize an equalization error or level jitter of the readout signal. Because of containing the readout signal fluctuation components caused by the interlayer crosstalk, target level fluctuation can be utilized for the calculation of the correction coefficient, as in the case of the above two examples. Fig. 18 shows an example of processing blocks having such a function. The flow of signal processing to the PLL is the same as those shown in Figs. 16 and 17. The PRML generates binary reproduced data resultant from the binarization, from the readout signal sampled by the reference clock generated by the PLL, by means of an algorithm for Viterbi detection. The Viterbi detection uses past and current sample data to output the most likely data sequence as a reproduced data stream. The correction coefficient calculation circuit calculates the correction coefficients from a variation in the target level, and a correction coefficient storage circuit holds the calculated correction coefficient.

Further, the present invention adopts an apparatus configuration as given in the appended claims. As an illustrative example of the present invention, there is provided an optical information reproducing apparatus for reproducing information by irradiating with a light beam an optical information recording medium having plural information layers, including: a means for capturing a readout signal reproduced by bringing the light beam into focus on one of the plural information layers; a means for storing the readout signal; a means for calculating a correction coefficient such that the readout signal is substantially constant; a means for storing the correction coefficient; and a means for performing computing on the readout signal and/or a different readout signal in the same information layer by use of the correction coefficient, thereby correcting fluctuation of the readout signal.

Also, the optical information reproducing apparatus includes a means for averaging plural correction coefficients obtained from readout signals on plural adjacent tracks; and a means for performing computing on the readout signal used for calculation of the correction coefficient and/or a different readout signal in the same information layer by use of the average correction coefficient, thereby correcting the fluctuation of the readout signal.

The optical information reproducing apparatus of the present invention may include a means for averaging readout signals on plural adjacent tracks; a means for correcting a correction coefficient from a virtual readout signal resultant from the averaging; and a means for performing computing on the readout signal used for calculation of the correction coefficient and/or a different readout signal in the same information layer by use of the average correction coefficient, thereby correcting the fluctuation of the readout signal.

Preferably, the optical information reproducing apparatus of the present invention further includes a means for calculating a modulation of the readout signal; a correction coefficient conversion table for correction coefficient conversion of top and bottom envelopes, based on modulation information; a means for storing the correction coefficient conversion table; and a means for correcting fluctuations of the top and bottom envelopes of the readout signal, using the correction coefficient conversion table. Utilization of the correction coefficient conversion table for the readout signal correction is effective for time reduction because of eliminating the need to calculate and store the respective correction coefficients for the top and bottom envelopes Of course, it will be understood that the approach may be adopted which involves capturing the respective fluctuations of the top and bottom envelopes and calculating and storing the respective correction coefficients therefor. In a situation where the correction coefficient conversion table cannot be applied, for example, when some warpage occurs in the optical head, the approach of determining the respective correction coefficients for the top and bottom envelopes enables achievement of accurate correction, although taking time.

An optical information recording medium suitable for the information reproducing method of the present invention, having plural information layers, is characterized by including write-protected areas for readout signal fluctuation correction, which are disposed at predetermined intervals in the radial direction of the optical information recording medium.

The write-protected areas for the readout signal fluctuation correction may be disposed at the same radius on two or more of the plural information layers at the predetermined intervals in the radial direction of the optical information recording medium. The disposition of the write-protected areas at the same radius has the advantage of being able to reduce the fluctuation components of the readout signal involved in recording. Preferably, information such as an address of a write-protected track is written in a disc management area. The writing of the address of the write-protected track in the disc management area has the advantage of reducing the processing time required for the optical information reproducing apparatus to perform information reproducing, because of enabling the drive to make an instantaneous determination of a radial position or the like on the write-protected track.

The present invention can achieve the optical information reproducing method and the optical information reproducing apparatus, capable of eliminating the influence of readout signal fluctuation even at the occurrence of the fluctuation in the readout signal caused by the interlayer crosstalk during reproduction on the optical information recording medium having the plural information layers, thereby enabling accurate restoration of information based on the readout signal as not affected by the influence of the interlayer crosstalk.

BRIEF DESCRIPTION OF THE DRAWINGS

Fig. 1 is a process flow chart of an information reproducing method according to the present invention.
Fig. 2 is a view illustrating the configuration of a conventional multilayer recording medium and the principle of independent reproduction on layers.
Fig. 3 is a schematic diagram of a readout signal according to one embodiment of the present invention.
Fig. 4 is a diagram showing a measurement method for calculation of a correction coefficient according to one embodiment of the present invention.
Fig. 5 is a diagram showing calculation for the calculation of the correction coefficient according to one embodiment of the present invention.
Fig. 6 is a schematic diagram of the readout signals before and after correction according to one embodiment of the present invention.
Fig. 7 is a process flow chart of the information reproducing method according to one embodiment of the present invention.
Fig. 8 is a process flow chart of the information reproducing method according to one embodiment of the present invention.
Fig. 9 is a process flow chart of the information reproducing method according to one embodiment of the present invention.
Fig. 10 is a diagram for explaining the calculation of the correction coefficient according to one embodiment of the present invention.
Fig. 11 is a diagram for explaining interlayer crosstalk in a multilayer recording medium.
Fig. 12 is a diagram of an information reproducing apparatus according to one embodiment of the present invention.
Fig. 13 is a diagram of the information reproducing apparatus according to one embodiment of the present invention.
Fig. 14 is a diagram of the information reproducing apparatus according to one embodiment of the present invention.
Fig. 15 is a diagram of the information reproducing apparatus and an optical information recording medium according to one embodiment of the present invention.
Fig. 16 is a diagram showing an example of the configuration of a data reproducing circuit of the present invention.
Fig. 17 is a diagram showing an example of the configuration of the data reproducing circuit of the present invention.
Fig. 18 is a diagram showing an example of the configuration of the data reproducing circuit of the present invention.
Fig. 19 is a diagram of the information reproducing apparatus according to one embodiment of the present invention.

Fig. 20 is a diagram of the information reproducing apparatus according to one embodiment of the present invention.

Fig. 21 is a schematic diagram of readout signals at different radii according to one embodiment of the present invention.

Fig. 22 is a plot showing the relationship between a modulation and the amount of bottom envelope fluctuation normalized by the amount of top envelope fluctuation.

Fig. 23 is a schematic diagram showing the capture of the readout signal and the calculation of the correction coefficient, and a correction method for reproduces signals at different radii.

DETAILED DESCRIPTION OF THE PREFERRED EMBODIMENTS

Best mode for carrying out the invention will be described below with reference to the drawings.

[First embodiment]

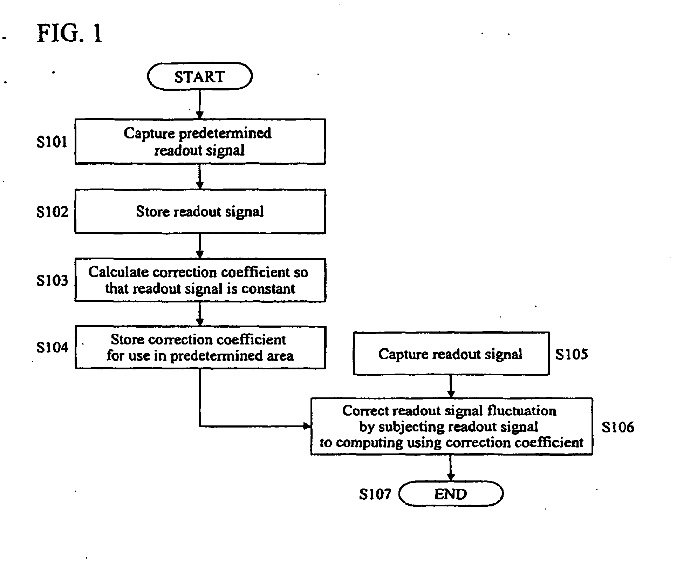

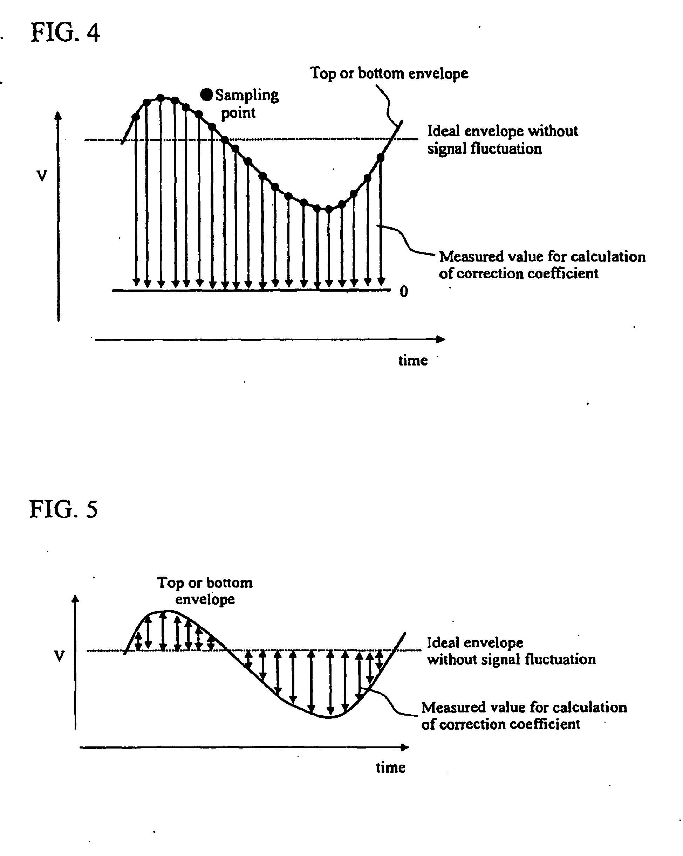

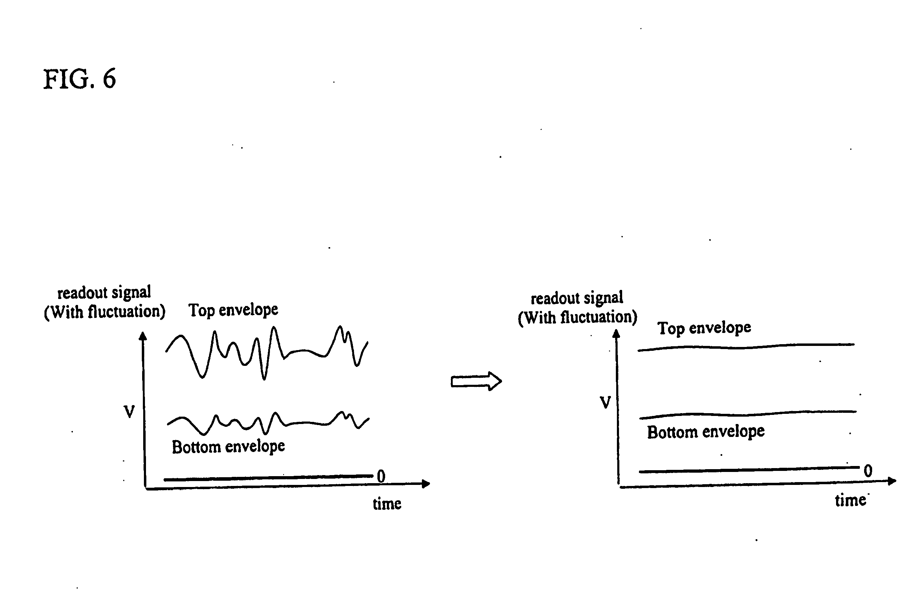

Fig. 1 shows a process flow chart of an information reproducing method according to one embodiment of the present invention. In the first embodiment, a multilayer recording medium of 12 cm diameter having a stacked construction of three information layers is used, and reproduction is performed on the layer located farthest away from a laser irradiation side. In this embodiment, correction coefficients are defined for each 1 mm, and the radius for calculating correction coefficient is set at intervals of 1 mm, for example, 24 mm, 25 mm, 26 mm, ..., and 57 mm. Description will be given here with regard to a readout signal correction method as implemented at the vicinity of a radius of 40 mm, as an example. First, a readout signal is captured at a radius of 40.0 mm (at step S101), and then stored (at step S102). Fig. 3 is a schematic diagram of the readout signal captured in an oscilloscope. Envelope signals of the readout signal are distorted under the influence of interlayer crosstalk, and thus, a reproduced result cannot be accurately restored as it is. Accordingly, a correction coefficient is calculated so that the readout signal is substantially constant (at step S103), and the correction coefficient is stored (at step S104). Specifically, as shown in Fig. 4, the voltage values of the readout signal were measured at sampling points (marked with "●" in Fig. 4), the ratio of the measured value to an ideal envelope under no signal fluctuation was calculated, and the reciprocal of the calculated ratio was set as the correction coefficient in a predetermined area. In this embodiment, a range of 39.5 mm to 40.5 mm was defined as the predetermined area. Then, a readout signal is captured at a radius of 40.1 mm (at step S 105), and the readout signal captured at step S105 undergoes correction by being subjected to a computing process using the- correction coefficient stored at step S104 (at step S106). Consequently, as shown in Fig. 6, the readout signal obtained at a radius of 40.1 mm was subjected to the correction using the correction coefficient calculated at a radius of 40 mm, to thereby form a good-quality readout signal with little fluctuation. Thus, the signal could be accurately restored.

Likewise, each correction coefficient was calculated for each radius from the innermost radius to the outermost radius as described above, and stored in memory. The correction coefficient calculated at a radius of 24 mm was used to correct a readout signal in a area of a radius of 23.5 mm to 24.5 mm, and the correction coefficient calculated at a radius of 25 mm was used to correct a readout signal in a area of a radius of 24.5 mm to 25.5 mm. As mentioned above, each correction coefficient was calculated in units of a predetermined radius, and stored. The use of each correction coefficient for the readout signal correction enables a correction process in a shorter time, as compared to a method that involves evaluating and correcting the amount of readout signal fluctuation every time the readout signal is read. The present invention is characterized by learning the amount of readout signal fluctuation in units of the predetermined radius and using the learned amount of correction in units of the predetermined area.

In the first embodiment, each correction coefficient is calculated in units of a radius of I mm, and the correction coefficient calculated at a radius of 40 mm is used for a area of a radius of 39.5 mm to 40.5 mm. However, a area of a radius of 40 to 41 mm or a area of a radius of 39 mm to 40 mm may be set as the area for which the correction coefficient is used, and any area will do, provided that the area contains a radius at which the readout signal captured for the calculation of the correction coefficient is present. However, the track for the calculation of the correction coefficient can be located at the midpoint of the area to thereby lessen the influence of the dependency of the readout signal fluctuation upon the radius, as is the case with the first embodiment. Also, likewise, the area for which the correction coefficient is used may be narrowed to a area of a radius of 39.75 mm to 40.25 mm or be rather widened to a area of a radius of 39 mm to 41 mm. The narrowed range has the advantage of being able to lessen the influence of the dependency of the readout signal fluctuation upon the radius, while the widened range has the advantage of being able to reduce the time for the calculation of the correction coefficient and the memory capacity for storage of the correction coefficient

Also, in the first embodiment, the ratio between the envelope of the readout signal and the ideal envelope under no signal fluctuation is calculated, and the reciprocal of the calculated ratio is set as the correction coefficient; however, a difference between the readout signal voltage value and the ideal envelope voltage value may be set as the correction coefficient, as shown in Fig. 5. Any correction coefficient will do, provided that the coefficient is correlated with the difference between the measured distortion-bearing readout signal and the ideal readout signal.

Also, information obtained for the readout signal correction may be used to suppress fluctuations in a tracking servo or the like.

Further, although in the first embodiment the correction coefficient is calculated from the readout signal on the information-bearing track to thereby suppress the readout signal fluctuation due to the interlayer crosstalk, the correction coefficient may be calculated from a readout signal on a so-called unrecorded track that does not bear information. Since the unrecorded track bears no information, the main cause of the signal fluctuation is often the interlayer crosstalk. Thus, the use of the unrecorded track enables accurate sampling of signal fluctuation components due to the interlayer crosstalk. As an example, with the use of the same disc as that mentioned above, the readout signal correction coefficient was calculated, and was stored, in an unrecorded area disposed at a radius of 43.00 mm, in accordance with the process flow chart shown in Fig. 1; and a readout signal in a recorded area at a radius of 43.05 mm was subjected to correction using the stored correction coefficient mentioned above. As a result, a good readout signal with little fluctuation could be obtained.

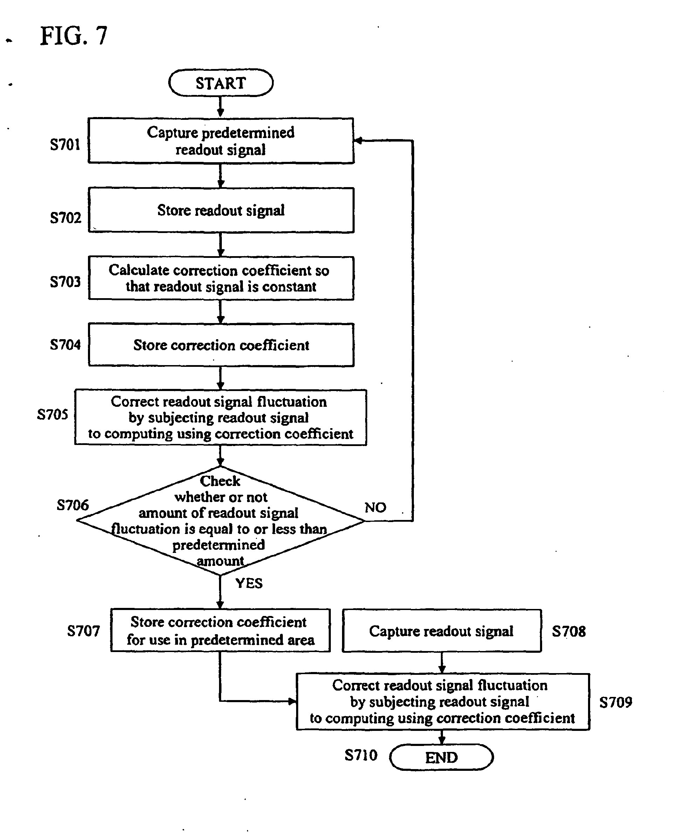

Also, as shown in a process flow chart of Fig. 7, after the calculation of the correction coefficient from the readout signal (at step S703), the correction coefficient is used to perform computing on the readout signal and thereby correct the readout signal fluctuation, and the amount of signal fluctuation is checked whether or not equal to or less than a predetermined amount (at step S706). This enables achieving the signal fluctuation correction with higher accuracy.

[Second embodiment]

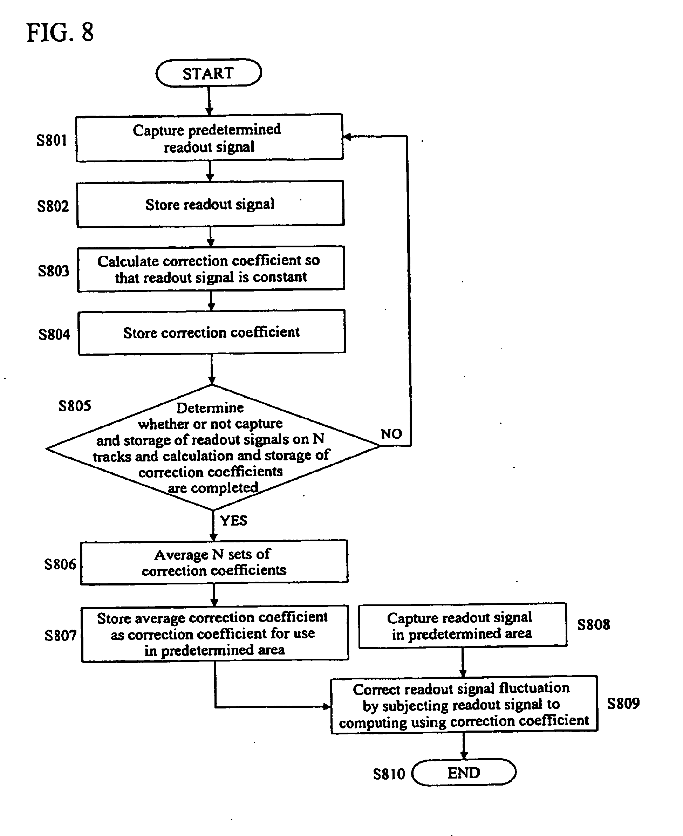

In the first embodiment, the readout signal on only one predetermined track is used for calculation of the correction coefficient. For the second embodiment, description will be given with reference to Fig. 8 with regard to an instance where readout signals on plural tracks are used for calculation of correction coefficients. First, a predetermined readout signal is captured (at step S801), the readout signal is stored (at step S802), a correction coefficient such that the readout signal is substantially constant is calculated (at step S803), and the correction coefficient is stored (at step S804). At this point, a determination is made as to whether or not the capture of plural predefined (N) readout signals and the calculation and storage of the correction coefficients are completed (at step S805). If they are not completed, steps S801 to S804 are executed until the calculation and storage of N sets of correction coefficients are completed. In the second embodiment, N is set equal to 5 ($N = 5$ ), and five sets of correction coefficients are calculated from readout signals on five tracks and are stored. Thereafter, the N sets of correction coefficients are averaged (at step S806), and the average correction coefficient is stored as the correction coefficient for use in a predetermined area (at step S807), which in turn is used for the readout signal fluctuation correction. In the second embodiment, the average correction coefficient is calculated from the readout signals on five contiguous tracks; however, the tracks do not have to be the contiguous tracks, and, for example, discrete tracks may be selected - for averaging of correction coefficients obtained therefrom. Also, if a determination is made that an accurate correction coefficient cannot be calculated due to the presence of a defect in a specified track, a different track in the same area may be used in place of the defective track.

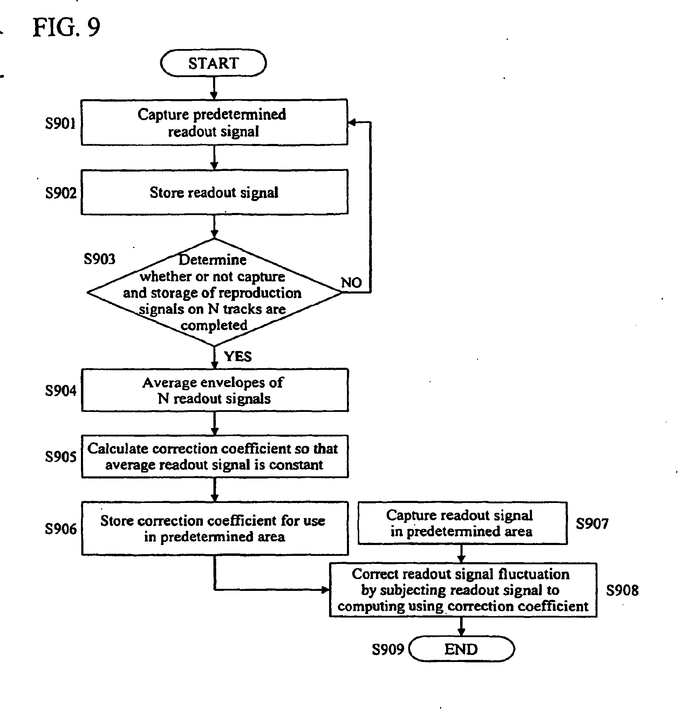

Also, in the second embodiment, the correction coefficients are calculated from each of the readout signals, and the correction coefficient obtained through the averaging of the plural correction coefficients is used as the correction coefficient for- the predetermined area; however, as shown in Fig. 9, processing may involve capturing plural readout signals; averaging envelope fluctuations of the readout signals (at step S904); calculating a correction coefficient such that the envelope of the averaged readout signal is substantially constant (at step S905); storing the correction coefficient (at step S906); and using the correction coefficient for the readout signal correction in the predetermined area.

A set frequency for the correction coefficient may be varied according to the area. As shown in Fig. 10, the frequency may be set high in the area where the readout signal fluctuates greatly to thereby increase the set number of correction coefficients, while the frequency is set low in the area where the readout signal fluctuates little. Varying a set frequency for the correction coefficient according to the magnitude of fluctuation per unit time enables fine setting of the correction coefficient in the area where the readout signal fluctuates greatly, while reducing the storage memory capacity. This enables accurate signal fluctuation correction.

[Third embodiment]

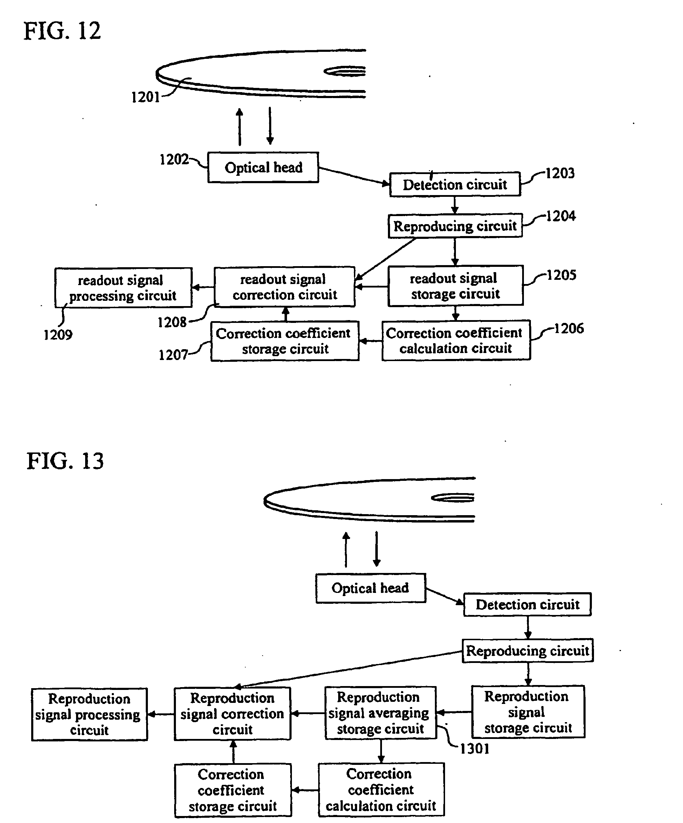

An example of an optical information reproducing apparatus for implementing the present invention will be described with reference to Fig. 12. First, an optical information recording medium 1201 having plural information layers is irradiated with a light beam from an optical head 1202, and the light beam is brought into focus in a predetermined area on one of the plural information layers for tracking. The signal light reflected from the recording medium is detected by a detection circuit 1203, the signal is reproduced by a reproducing circuit 1204, and the readout signal is stored in a readout signal storage circuit 1205. Then, a correction coefficient is calculated by a correction coefficient calculation circuit 1206 for calculating the correction coefficient such that the readout signal is substantially constant, and the calculated correction coefficient is stored in a correction coefficient storage circuit 1207. The stored correction coefficient is used for the readout signal correction in the predetermined area containing the signal reproduced for the calculation of the correction coefficient. For the readout signal in the predetermined area, likewise, the optical information recording medium 1201 is irradiated with the light beam from the optical head 1202, the signal light reflected from the optical information recording medium 1201 is detected by the detection circuit 1203, and the signal is reproduced by the reproducing circuit 1204. Then, a readout signal correction circuit 1208 corrects signal using the correction coefficient stored in the correction coefficient storage circuit 1207, and signal processing is performed by a readout signal processing circuit 1209.

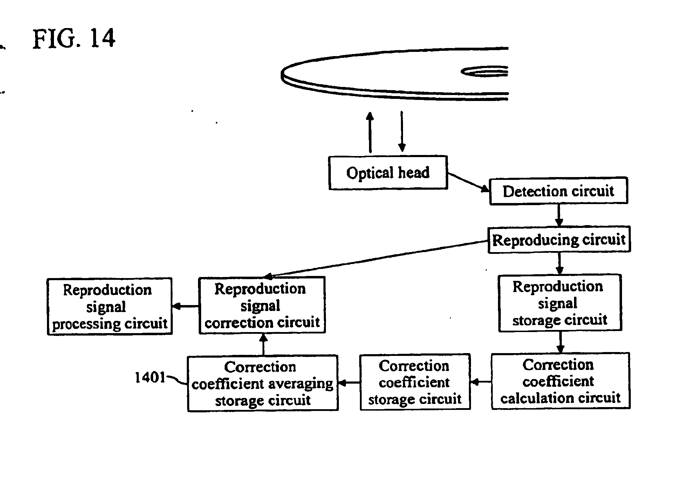

The apparatus of the present invention also includes a readout signal averaging storage circuit 1301 for reproducing and storing readout signals on plural tracks and averaging and storing the readout signals, as shown in Fig. 13. In the circuit 1301, a correction coefficient is calculated from a virtual readout signal resultant from the averaging by use of the correction coefficient calculation circuit, and the calculated correction coefficient is stored in the correction coefficient storage circuit. The stored correction coefficient is used for the readout signal correction in the predetermined area containing the signal reproduced for the calculation of the correction coefficient. Although a process for capturing each reproducing signal on the plural tracks and averaging the readout signals is described here, the apparatus of the present invention may perform plural reproductions on the same track and average the obtained readout signals. Further, as shown in Fig. 14, the apparatus may be configured to calculate correction coefficients from readout signals, respectively, to average the plural correction coefficients by a correction coefficient averaging storage circuit 1401, and to use the average correction coefficient for the readout signal correction in the predetermined area.

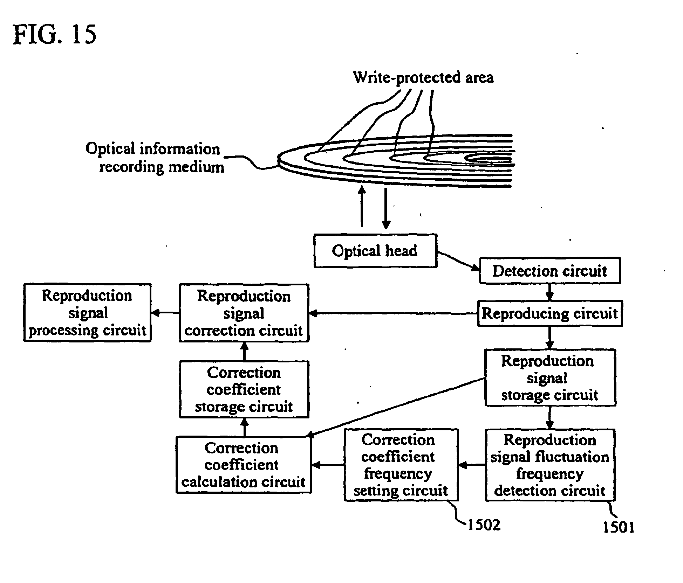

Further, as shown in Fig. 15, the information reproducing apparatus of the present invention may be configured to detect the frequency of readout signal fluctuation by a readout signal fluctuation frequency detection circuit 1501 and increase or reduce, by a correction coefficient frequency setting circuit 1502, the number of correction coefficients set according to the readout signal fluctuation.

As shown in Fig. 15, an optical information recording medium suitable for the information reproducing method of the present invention includes write-protected areas for readout signal fluctuation correction, which are disposed at predetermined intervals in the radial direction of the optical information recording medium. Preferably, the write-protected areas are disposed at the same radius on two or more of the plural information layers. Such disposition of the write-protected areas at the same radius has the advantage of being able to reduce the fluctuation components of the readout signal involved in recording. Preferably, information such as an address of a write-protected track is recorded in a disc management area. The writing of the address of the write-protected track in the disc management area has the advantage of reducing the processing time required for the optical information reproducing apparatus to perform information reproduction, because of enabling the drive to make an instantaneous determination of a radial position or the like on the write-protected track. Fig. 15 is a schematic view, in which only four write-protected areas are shown; however, it is to be understood that the number of write-protected areas of the present invention is not limited to this.

Further, as shown in Fig. 19, the information reproducing apparatus of the present invention utilizes a disc rotation synchronizing signal obtained from a spindle motor 1901 to store in memory 1903 the correction coefficient in correspondence with a circumferential position on the disc, or equivalently, an angle. Angle detection utilizing the disc rotation synchronizing signal is performed by an angle detection circuit 1902, and the readout signal, the correction coefficient, the circumferential position represented by the angle, and so on can be stored in the memory 1903. The readout signal correction corresponding to the circumferential position enables providing accurate correction to even the readout signal in a different radial position.

The optical information reproducing method and the optical information reproducing apparatus of the present invention can suppress the influence of the interlayer crosstalk and thereby achieve accurate reproduction, for example, in the case where the readout signal on the multilayer optical recording medium is affected by the influence of the interlayer crosstalk.

**Claims**

1. An optical information reproducing method for reproducing information by irradiating a light beam (31) onto a disc-shaped optical information recording medium (1201) having a plurality of information layers (211-214), comprising the steps of:

    detecting (S101; S701; S801; S901) a readout signal reproduced with the light beam (31) focused on a predetermined track at each of a plurality of regions obtained by dividing the whole area of the optical information recording medium (1201) into a plurality of sections in the radial direction of one of the plurality of information layers (211-214), the readout signal being affected by fluctuation caused by interlayer crosstalk, storing (S 102; S702; S802; S902) the readout signal;
    detecting and sampling an envelope of the readout signal;

calculating (S103; S703; S803; S903), from the sampled top or bottom envelope signal, correction coefficients for each of said plurality of regions correcting the fluctuation caused by interlayer crosstalk of the sampled top or bottom envelope signal;

storing (S104; S704; S804; S904) each correction coefficient in correspondence with the radial position of said predetermined track on said disc-shaped optical medium (1201); and

correcting fluctuations caused by interlayer crosstalk of a readout signal (S106; S705; S809; S908) obtained from another track, which is different from said predetermined track and lies in said information layer (211-214) for each of the plurality of regions by applying to said readout signal obtained from said other track the correction coefficients calculated for said predetermined track corresponding to the radial position of said other track.

2. The method of claim 1, further comprising the steps of:

averaging (S806) a plurality of correction coefficients obtained from readout signals on a plurality of adjacent tracks present on said information layer (211-214); and

correcting (S809) fluctuation of the readout signal obtained from said information layer, by subjecting the readout signal to a correction using the average correction coefficients.

3. The method of claim 1, wherein

plural readout signals are obtained from a plurality of adjacent tracks present on said information layer (211-214), and the readout signals are averaged (S904);

the correction coefficients are calculated (S905) from an average readout signal obtained by an averaging step; and

a fluctuation of the readout signal obtained from said information layer (211-214) is corrected (S908) by subjecting the readout signal to a correction using the correction coefficients.

4. The method of claim 1, wherein

the number (N) of sampling points of the readout signal used for calculation of the correction coefficients is changed according to the amount of fluctuation of the readout signal per unit time, and/or

the readout signal is a readout signal in an unrecorded area that does not bear information, and/or

the correction coefficients are stored in conjunction with information such as a radial position in which the correction coefficients are calculated, and the step of correcting the fluctuation of the readout signal is performed using the stored correction coefficients.

5. The method of claim 1, wherein

the step of calculating the correction coefficients includes detecting a readout signal fluctuation using a readout signal processing circuit and calculating the correction coefficients using the readout signal fluctuation, and the readout signal processing circuit is preferably any one of an automatic slicer, an automatic gain control circuit and a PRML processing circuit, and/or

the step of correcting the fluctuation of the arbitrary readout signal includes calculating a modulation of the readout signal targeted for correction, and correcting fluctuations of top and bottom envelopes of said readout signal targeted for correction, using a correction coefficient conversion table prepared beforehand.

6. The method of claim 1, wherein

the step of obtaining the readout signal is performed in a first radial position on the aforementioned information layer (211-214),

the correction coefficients are calculated using the obtained readout signal, and the step of correcting the fluctuation is performed to the readout signal obtained in a second radial position that is different from the first radial position.

7. The method of claim 7, wherein

the step of storing the correction coefficients includes storing the correction coefficients obtained from the readout signal in the first radial position and storing angle information on the first radial position, and

the step of correcting the fluctuation of the readout signal obtained in the second radial position is performed using the correction coefficients corresponding to a position of an intersection of a virtual line, which is drawn from a position in which the readout signal targeted for correction is obtained toward the center of the optical information recording medium (1201), and the circumference at the first radial position.

8. An optical information reproducing apparatus adapted for reproducing information by irradiating a light beam (31) onto an optical information recording medium (1201) having a plurality of information layers (211-214), comprising:

means (1202-1204) adapted to detect a readout signal reproduced with the light beam (31) focused on a predetermined track at each of a plurality of regions obtained by dividing the whole area of the optical information recording medium (1201) into a plurality of sections in the radial direction of one of the plurality of information layers (211-214), the readout signal being affected by fluctuation caused by interlayer crosstalk;

means (1205) adapted to store the readout signal;

means adapted to detect and sample an envelope of the readout signal,

means (1206) adapted to calculate, from the sampled top or bottom envelope signal, correction coefficients for each of said plurality of regions correcting the fluctuation caused by interlayer crosstalk of the sampled top or bottom envelope signal;

means (1207) adapted to store each correction coefficient in correspondence with its radial position of said predetermined track on the disc-shaped optical medium (1201); and

means (1208) adapted to correct fluctuation caused by interlayer crosstalk of a readout signal obtained from another track, which is different from said predetermined track and lies in said information layer (211-214) for each of the plurality of regions, by applying to said readout signal obtained from said other track the correction coefficients calculated for said predetermined track corresponding to said radial position of said other track.

9. The apparatus of claim 8, further comprising means (1301) for averaging a plurality of correction coefficients obtained from readout signals on a plurality of adjacent tracks present on the aforementioned information layer (211-214), wherein the means (1208) for correcting the fluctuation of said readout signal is adapted to correct fluctuation of the readout signal obtained from the aforementioned information layer (211-214), by subjecting the readout signal to a correction using the average correction coefficients.

10. The apparatus of claim 8, further comprising means (1301) for averaging readout signals on a plurality of adjacent tracks present on the aforementioned information layer (211-214), wherein the means (1206) for calculating the correction coefficients is adapted to calculate the correction coefficients from the averaged readout signal, and the means (1208) for correcting the fluctuation of the readout signal is adapted to correct fluctuation of the readout signal obtained from said information layer (211-214), by subjecting the readout signal to a correction using the correction coefficients.

11. The apparatus of claim 8, further comprising:

means for calculating a modulation of the readout signal;

means for storing a correction coefficient conversion table; and

means for correcting fluctuations of top and bottom envelopes of the readout signal, using the correction coefficient conversion table.


**Patentansprüche**

1. Optisches Informationswiedergabeverfahren zum Wiedergeben von Informationen durch Bestrahlen eines plattenförmigen optischen Informationsaufzeichnungsmediums (1201), das mehrere Informationsschichten (211-214) aufweist, mit einem Lichtstrahl (31), wobei:

ein Auslesesignal erfasst wird (S101, S701, S801, S901), das mit dem auf eine vorgegebene Spur in jedem von mehreren Bereichen fokussierten Lichtstrahl (31) wiedergegeben wird, wobei die Bereiche dadurch entstehen, dass die gesamte Fläche des optischen Informationsaufzeichnungsmediums (1201) in der Radialrichtung einer der mehreren Informationsschichten (211-214) in mehrere Abschnitte unterteilt wird, wobei das Auslesesignal von durch Übersprechen zwischen den Schichten verursachten Schwankungen beeinflusst ist, das Auslesesignal gespeichert wird (S102, S702, S802, S902),

eine Hüllkurve des Auslesesignals erfasst und abgetastet wird,

für jeden der mehreren Bereiche aus dem abgetasteten oberen oder unteren Hüllkurvensignal Korrekturkoeffizienten berechnet werden (S103, S703, S803, S903), die die durch das Übersprechen zwischen den Schichten verursachte Schwankung des abgetasteten oberen oder unteren Hüllkurvensignals korrigieren,

jeder Korrekturkoeffizient entsprechend der radialen Position der vorgegebenen Spur auf dem plattenförmigen optischen Medium (1201) gespeichert wird (S104, S704, S804, S904), und

Schwankungen infolge von Übersprechen zwischen Schichten durch ein Auslesesignal (S106, S705, S809, S908), das aus einer anderen Spur gewonnen wird, die von der vorgegebenen Spur verschieden ist und in der Informationsschicht (211-214) liegt, für jeden der mehreren Bereiche dadurch korrigiert werden, dass auf das aus der anderen Spur gewonnene Auslesesignal die Korrekturkoeffizienten angewendet werden, die für die der radialen Position der anderen Spur entsprechende vorgegebene Spur berechnet werden.

2. Verfahren nach Anspruch 1, wobei ferner:

mehrere Korrekturkoeffizienten gemittelt werden (S806), die aus Auslesesignalen aus mehreren in der Informationsschicht (211-214) vorhandenen benachbarten Spuren gewonnen werden, und
die Schwankung des aus der Informationsschicht gewonnenen Auslesesignals dadurch berechnet wird (S809), dass das Auslesesignal einer Korrektur unter Verwendung der mittleren Korrekturkoeffizienten unterworfen wird.

3. Verfahren nach Anspruch 1, wobei
aus mehreren in der Informationsschicht (211-214) vorhandenen benachbarten Spuren mehrere Auslesesignale gewonnen und diese gemittelt (S904) werden,
aus einem durch die Mittelung gewonnenen mittleren Auslesesignal die Korrekturkoeffizienten berechnet werden (S905) und
die Schwankung des aus der Informationsschicht (211-214) gewonnenen Auslesesignals dadurch korrigiert wird (S908), dass das Auslesesignal einer Korrektur unter Verwendung der Korrekturkoeffizienten unterworfen wird.

4. Verfahren nach Anspruch 1, wobei
die für die Berechnung der Korrekturkoeffizienten verwendete Anzahl (N) von Abtastpunkten des Auslesesignals entsprechend der Größe der Schwankung des Auslesesignals pro Zeiteinheit geändert wird und/oder
das Auslesesignal ein Auslesesignal eines nicht aufgezeichneten Bereichs ist, der kein Informationen enthält, und/oder
die Korrekturkoeffizienten in Verbindung mit Informationen, etwa der radialen Position, in der die Korrekturkoeffizienten berechnet werden, gespeichert werden und die Korrektur der Schwankung des Auslesesignals unter Verwendung der gespeicherten Korrekturkoeffizienten erfolgt.

5. Verfahren nach Anspruch 1, wobei
zum Berechnen der Korrekturkoeffizienten eine Auslesesignalschwankung mittels einer Auslesesignal-Verarbeitungsschaltung wird und die Korrekturkoeffizienten unter Verwendung der Auslesesignalschwankung berechnet werden, wobei die Auslesesignal-Verarbeitungsschaltung vorzugsweise ein automatischer Doppelbegrenzer oder eine automatische Verstärkungssteuerschaltung oder eine PRML-Verarbeitungsschaltung ist, und/oder
zum Korrigieren der Auslesesignalschwankung eine Modulation des zu korrigierenden Auslesesignals berechnet wird und Schwankungen der oberen und der unteren Hüllkurve des zu korrigierenden Auslesesignals unter Verwendung einer vorher erstellten Korrekturkoeffizient-Umwandlungstabelle korrigiert werden.

6. Verfahren nach Anspruch 1, wobei
das Auslesesignal in einer ersten radialen Position auf der Informationsschicht (211-214) gewonnen wird,
die Korrekturkoeffizienten unter Verwendung des gewonnenen Auslesesignals berechnet werden und
die Korrektur der Schwankung an dem Auslesesignal durchgeführt wird, das in einer von der ersten Position verschiedenen zweiten Position gewonnen wird.

7. Verfahren nach Anspruch 7, wobei
beim Speichern der Korrekturkoeffizienten die in der ersten radialen Position aus dem Auslesesignal gewonnenen Korrekturkoeffizienten sowie Winkelinformationen bezüglich der ersten radialen Position gespeichert werden und die Korrektur der Schwankung des in der zweiten radialen Position gewonnenen Auslesesignals unter Verwendung der Korrekturkoeffizienten erfolgt, die der Position des Schnittpunktes einer virtuellen Linie, die von einer Position, an der das zu korrigierende Auslesesignal gewonnen wird, zur Mitte des optischen Informationsaufzeichnungsmediums (1201) verläuft, mit dem Umfang an der ersten radialen Position entsprechen.

8. Optische Informationswiedergabevorrichtung zum Wiedergeben von Informationen durch Bestrahlen eines optischen Informationsaufzeichnungsmediums (1201), das mehrere Informationsschichten (211-214) aufweist, mit einem Lichtstrahl (31), mit:

einer Einrichtung (1202-1204) zum Erfassen eines Auslesesignals, das mit dem auf eine vorgegebene Spur in jedem von mehreren Bereichen fokussierten Lichtstrahl (31) wiedergegeben wird, wobei die Bereiche dadurch entstehen, dass die gesamte Fläche des optischen Informationsaufzeichnungsmediums (1201) in der Radialrichtung einer der mehreren Informationsschichten (211-214) in mehrere Abschnitte unterteilt wird, wobei das Auslesesignal von durch Übersprechen zwischen den Schichten verursachten Schwankungen beeinflusst ist, einer Einrichtung (1205) zum Speichern des Auslesesignals, einer Einrichtung zum Erfassen und Abtasten einer Hüllkurve des Auslesesignals, einer Einrichtung (1206), die so ausgelegt ist, dass sie aus dem abgetasteten oberen oder unteren Hüllkurvensignal für jeden der mehreren Bereiche Korrekturkoeffizienten berechnet, die die durch das Übersprechen zwischen den Schichten verursachte Schwankung des abgetasteten oberen oder unteren Hüllkurvensignals korrigieren, einer Einrichtung (1207), die so ausgelegt ist, dass sie jeden Korrekturkoeffizient entsprechend der radialen Position der vorgegebenen Spur auf dem plattenförmigen optischen Medium (1201) speichert, und einer Einrichtung (1208), die so ausgelegt ist, dass sie Schwankungen infolge von Übersprechen zwischen Schichten durch ein Auslesesignal (S106, S705, S809, S908), das aus einer anderen Spur gewonnen ist, die von der vorgegebenen Spur verschieden ist und in der Informationsschicht (211-214) liegt, für jeden der mehreren Bereiche dadurch korrigiert, dass sie auf das aus der anderen Spur gewonnene Auslesesignal die Korrekturkoeffizienten anwendet, die für die der radialen Position der anderen Spur entsprechende vorgegebene Spur berechnet sind.

9. Vorrichtung nach Anspruch 8, mit ferner einer Einrichtung (1301) zum Mitteln mehrerer Korrekturkoeffizienten, die aus Auslesesignalen aus mehreren in der Informationsschicht (211-214) vorhandenen benachbarten Spuren gewonnen sind, wobei die Einrichtung (1208) zum Korrigieren der Schwankung des Auslesesignals so ausgelegt ist, dass sie die Schwankung des aus der genannten Informationsschicht (211-214) gewonnenen Auslesesignals dadurch berechnet, dass sie das Auslesesignal einer Korrektur unter Verwendung der mittleren Korrekturkoeffizienten unterwirft.

10. Vorrichtung nach Anspruch 8, mit ferner einer Einrichtung (1301) zum Mitteln der Auslesesignale aus mehreren in der Informationsschicht (211-214) vorhandenen benachbarten Spuren, wobei die Einrichtung (1206) zum Berechnen der Korrekturkoeffizienten so ausgelegt ist, dass sie die Korrekturkoeffizienten aus dem gemittelten Auslesesignal berechnet, und die Einrichtung (1208) zum Korrigieren der Schwankung des Auslesesignals so ausgelegt ist, dass sie die Schwankung des aus der Informationsschicht (211-214) gewonnenen Auslesesignals dadurch korrigiert, dass sie das Auslesesignal einer Korrektur unter Verwendung der Korrekturkoeffizienten unterwirft.

11. Vorrichtung nach Anspruch 8, mit ferner:

einer Einrichtung zum Berechnen einer Modulation des Auslesesignals, einer Einrichtung zum Speichern einer Korrekturkoeffizient-Umwandlungstabelle und einer Einrichtung zum Korrigieren von Schwankungen der oberen und der unteren Hüllkurve des Auslesesignals unter Verwendung der Korrekturkoeffizient-Umwandlungstabelle.

## Revendications

1. Procédé de lecture d'informations optiques pour lire des informations en irradiant un faisceau de lumière (31) sur un support d'enregistrement d'informations optiques en forme de disque (1201) ayant une pluralité de couches d'informations (211-214), comportant les étapes consistant à :

détecter (S101 ; S701 ; S801 ; S901) un signal de lecture lu à l'aide du faisceau de lumière (31) focalisé sur une piste prédéterminée au niveau de chaque région parmi une pluralité de régions obtenue en divisant la zone entière du support d'enregistrement d'informations optiques (1201) en une pluralité de sections dans la direction radiale d'une couche parmi la pluralité de couches d'informations (211-214), le signal de lecture étant affecté par une fluctuation engendrée par une diaphonie inter-couche, mémoriser (S102 ; S702 ; S802 ; S902) le signal de lecture, détecter et échantillonner une enveloppe du signal de lecture, calculer (S103 ; S703 ; S803 ; S903), à partir du signal d'enveloppe supérieure ou inférieure échantillonnée, des coefficients de correction pour chaque région de ladite pluralité de régions corrigeant la fluctuation engendrée par une diaphonie inter-couche du signal d'enveloppe supérieure ou inférieure échantillonné,
mémoriser (S104 ; S704 ; S804 ; S904) chaque coefficient de correction en correspondance avec la position radiale de ladite piste prédéterminée sur ledit support optique en forme de disque (1201), et
corriger des fluctuations engendrées par une diaphonie inter-couche d'un signal de lecture (S106 ;

S705 ; S809 ; S908) obtenu à partir d'une autre piste, laquelle est différente de ladite piste prédéterminée et repose dans ladite couche d'informations (211-214) pour chaque région de la pluralité de régions en appliquant audit signal de lecture obtenu à partir de ladite autre piste les coefficients de correction calculés pour ladite piste prédéterminée correspondant à la position radiale de ladite autre piste.

2. Procédé selon la revendication 1, comportant en outre les étapes consistant à :

mettre en moyenne (S806) une pluralité de coefficients de correction obtenus à partir de signaux de lecture sur une pluralité de pistes adjacentes présentes sur ladite couche d'informations (211-214), et
corriger (S809) la fluctuation du signal de lecture obtenu à partir de ladite couche d'informations, en soumettant le signal de lecture à une correction en utilisant les coefficients de correction moyens.

3. Procédé selon la revendication 1, dans lequel
plusieurs signaux de lecture sont obtenus à partir d'une pluralité de pistes adjacentes présentes sur ladite couche d'informations (211-214), et les signaux de lecture sont mis en moyenne (S904),
les coefficients de correction sont calculés (S905) à partir d'un signal de lecture moyen obtenu par une étape de mise en moyenne, et
une fluctuation du signal de lecture obtenu à partir de ladite couche d'informations (211-214) est corrigée (S908) en soumettant le signal de lecture à une correction en utilisant les coefficients de correction.

4. Procédé selon la revendication 1, dans lequel
le nombre (N) de points d'échantillonnage du signal de lecture utilisé pour le calcul des coefficients de correction est modifié conformément à la quantité de fluctuation du signal de lecture par unité de temps, et/ou
le signal de lecture est un signal de lecture dans une zone non enregistrée qui ne supporte pas d'informations, et/ou
les coefficients de correction sont mémorisés en association avec des informations telles qu'une position radiale dans laquelle les coefficients de correction sont calculés, et l'étape de correction de la fluctuation du signal de lecture est exécutée en utilisant les coefficients de correction mémorisés.

5. Procédé selon la revendication 1, dans lequel
l'étape de calcul des coefficients de correction inclut de détecter une fluctuation de signal de lecture en utilisant un circuit de traitement de signal de lecture et en calculant les coefficients de correction en utilisant la fluctuation de signal de lecture, et le circuit de traitement de signal de lecture est de manière préférée l'un quelconque d'un filtre limiteur, d'un circuit de commande automatique de gain et d'un circuit de traitement PRML, et/ou
l'étape de correction de la fluctuation du signal de lecture inclut de calculer une modulation du signal de lecture ciblée pour la correction, et de corriger des fluctuations d'enveloppes supérieure et inférieure dudit signal de lecture ciblé pour la correction, en utilisant un tableau de conversion de coefficients de correction préparé à l'avance.

6. Procédé selon la revendication 1, dans lequel
l'étape d'obtention du signal de lecture est exécutée dans une première position radiale sur la couche d'informations susmentionnée (211-214),
les coefficients de correction sont calculés en utilisant le signal de lecture obtenu, et
l'étape de correction de la fluctuation est exécutée sur le signal de lecture obtenu dans une seconde position radiale qui est différente de la première position radiale.

7. Procédé selon la revendication 7, dans lequel
l'étape de mémorisation des coefficients de correction inclut de mémoriser les coefficients de correction obtenus à partir du signal de lecture dans la première position radiale et de mémoriser des informations d'angle sur la première position radiale, et
l'étape de correction de la fluctuation du signal de lecture obtenu dans la seconde position radiale est exécutée en utilisant les coefficients de correction correspondant à une position d'une intersection d'une ligne virtuelle, laquelle est dessinée à partir d'une position dans laquelle le signal de lecture ciblée en vue de la correction est obtenu en direction du centre du support d'enregistrement d'informations optiques (1201), et de la circonférence au niveau de la première position radiale.

**8.** Dispositif de lecture d'informations optiques adapté pour lire des informations en irradiant un faisceau de lumière (31) sur un support d'enregistrement d'informations optiques (1201) ayant une pluralité de couches d'informations (211-214), comportant :

des moyens (1202-1204) adaptés pour détecter un signal de lecture reproduit à l'aide du faisceau de lumière (31) focalisé sur une piste prédéterminée au niveau de chaque région parmi une pluralité de régions obtenue en divisant la zone entière du support d'enregistrement d'informations optiques (1201) en une pluralité de sections dans la direction radiale d'une couche de la pluralité de couches d'informations (211-214), le signal de lecture étant affecté par une fluctuation engendrée par une diaphonie inter-couche,
des moyens (1205) adaptés pour mémoriser le signal de lecture,
des moyens adaptés pour détecter et échantillonner une enveloppe du signal de lecture,
des moyens (1206) adaptés pour calculer, à partir du signal d'enveloppe supérieure ou inférieure échantillonné, des coefficients de correction pour chaque région parmi ladite pluralité de régions corrigeant la fluctuation engendrée par une diaphonie inter-couche du signal d'enveloppe supérieure ou inférieure échantillonné,
des moyens (1207) adaptés pour mémoriser chaque coefficient de correction en correspondance avec sa position radiale de ladite piste prédéterminée sur le support optique en forme de disque (1201), et
des moyens (1208) adaptés pour corriger une fluctuation engendrée par une diaphonie inter-couche d'un signal de lecture obtenu à partir d'une autre piste, laquelle est différente de ladite piste prédéterminée et repose dans ladite couche d'informations (211-214) pour chaque région de la pluralité de régions, en appliquant audit signal de lecture obtenu à partir de ladite autre piste les coefficients de correction calculés pour ladite piste prédéterminée correspondant à ladite position radiale de ladite autre piste.

**9.** Dispositif selon la revendication 8, comportant en outre des moyens (1301) pour mettre en moyenne une pluralité de coefficients de correction obtenus à partir de signaux de lecture sur une pluralité de pistes adjacentes présentes sur la couche d'informations susmentionnée (211-214),
dans lequel les moyens (1208) pour corriger la fluctuation dudit signal de lecture sont adaptés pour corriger la fluctuation du signal de lecture obtenu à partir de la couche d'informations susmentionnée (211-214) en soumettant le signal de lecture à une correction en utilisant les coefficients de correction moyens.

**10.** Dispositif selon la revendication 8, comportant en outre des moyens (1301) pour mettre en moyenne des signaux de lecture sur une pluralité de pistes adjacentes présentes sur la couche d'informations susmentionnée (211-214), dans lequel
des moyens (1206) pour calculer les coefficients de correction sont adaptés pour calculer les coefficients de correction à partir du signal de lecture mis en moyenne, et
les moyens (1208) pour corriger la fluctuation du signal de lecture sont adaptés pour corriger une fluctuation du signal de lecture obtenu à partir de ladite couche d'informations (211-214), en soumettant le signal de lecture à une correction en utilisant les coefficients de correction.

**11.** Dispositif selon la revendication 8, comportant en outre :

des moyens pour calculer une modulation du signal de lecture,
des moyens pour mémoriser un tableau de conversion de coefficients de correction, et
des moyens pour corriger des fluctuations d'enveloppes supérieure et inférieure du signal de lecture, en utilisant le tableau de conversion de coefficients de correction.

FIG. 1

```
                    ┌─────────────────┐
                    │      START      │
                    └────────┬────────┘
                             │
            ┌────────────────▼────────────────┐
    S101    │   Capture predetermined         │
            │        readout signal           │
            └────────────────┬────────────────┘
                             │
            ┌────────────────▼────────────────┐
    S102    │      Store readout signal       │
            └────────────────┬────────────────┘
                             │
            ┌────────────────▼────────────────┐
    S103    │ Calculate correction coefficient so │
            │   that readout signal is constant   │
            └────────────────┬────────────────┘
                             │
            ┌────────────────▼────────────────┐         ┌──────────────────────┐
    S104    │  Store correction coefficient   │         │  Capture readout signal │  S105
            │  for use in predetermined area  │         └──────────┬───────────┘
            └────────────────┬────────────────┘                    │
                             │                   ┌─────────────────▼──────────────────┐
                             └──────────────────▶│   Correct readout signal fluctuation │
                                                 │   by subjecting readout signal       │  S106
                                                 │ to computing using correction coefficient │
                                                 └─────────────────┬──────────────────┘
                                                                   │
                                                        ┌──────────▼──────────┐
                                                 S107   │         END         │
                                                        └─────────────────────┘
```

FIG. 2

FIG. 3

## FIG. 4

Top or bottom envelope

● Sampling point

Ideal envelope without signal fluctuation

Measured value for calculation of correction coefficient

V

0

time

## FIG. 5

Top or bottom envelope

Ideal envelope without signal fluctuation

Measured value for calculation of correction coefficient

V

time

FIG. 6

# FIG. 7

START

S701 | Capture predetermined readout signal

S702 | Store readout signal

S703 | Calculate correction coefficient so that readout signal is constant

S704 | Store correction coefficient

S705 | Correct readout signal fluctuation by subjecting readout signal to computing using correction coefficient

S706 | Check whether or not amount of readout signal fluctuation is equal to or less than predetermined amount

NO

YES

S707 | Store correction coefficient for use in predetermined area

Capture readout signal | S708

S709 | Correct readout signal fluctuation by subjecting readout signal to computing using correction coefficient

S710 | END

# FIG. 8

START

S801 | Capture predetermined readout signal

S802 | Store readout signal

S803 | Calculate correction coefficient so that readout signal is constant

S804 | Store correction coefficient

S805 | Determine whether or not capture and storage of readout signals on N tracks and calculation and storage of correction coefficients are completed

NO

YES

S806 | Average N sets of correction coefficients

S807 | Store average correction coefficient as correction coefficient for use in predetermined area

S808 | Capture readout signal in predetermined area

S809 | Correct readout signal fluctuation by subjecting readout signal to computing using correction coefficient

S810 | END

## FIG. 9

START

S901 | Capture predetermined readout signal

S902 | Store readout signal

S903 | Determine whether or not capture and storage of reproduction signals on N tracks are completed

NO

YES

S904 | Average envelopes of N readout signals

S905 | Calculate correction coefficient so that average readout signal is constant

S906 | Store correction coefficient for use in predetermined area

S907 | Capture readout signal in predetermined area

S908 | Correct readout signal fluctuation by subjecting readout signal to computing using correction coefficient

S909 | END

FIG. 10

readout signal (With fluctuation)

V

Top envelop

Bottom envelope

0

time

Envelope

●Sampling point

Envelope

Measured value for calculation of correction coefficient

0

0

FIG. 11

Incoming light

Unnecessary light spot

(N-2)th layer

(N-1)th layer

N-th layer

## FIG. 12

## FIG. 13

# FIG. 14

# FIG. 15

Write-protected area

Optical information
recording medium

Optical head

Detection circuit

| Reproduction signal processing circuit | ← | Reproduction signal correction circuit | ← | | Reproducing circuit |

Correction coefficient storage circuit

Reproduction signal storage circuit

| Correction coefficient calculation circuit | ← | Correction coefficient frequency setting circuit | ← | Reproduction signal fluctuation frequency detection circuit |

1502        1501

## FIG. 16

Reproduction signal → HPF → EQ → AGC → Automatic slicer → PLL

AGC → Correction coefficient calculation circuit → Correction coefficient storage circuit

## FIG. 17

Reproduction signal → HPF → EQ → AGC → Automatic slicer → PLL

Automatic slicer → Correction coefficient calculation circuit → Correction coefficient storage circuit

## FIG. 18

Reproduction signal → HPF → EQ → AGC →

→ Automatic slicer → PLL → PRML →

PRML → Correction coefficient calculation circuit → Correction coefficient storage circuit

## FIG. 19

## FIG. 20

FIG. 21

FIG. 22

## FIG. 23

Spindle index

Second virtual line

$\theta$

r1

r2

| Circumferential location $\theta$ (° ) from spindle index | 0 | 5 | 10 | 15 | . . . . | 350 | 355 |
|---|---|---|---|---|---|---|---|
| Readout signal (mV) | 285 | 295 | 300 | 263 | . . . . | 270 | 310 |
| Correction coefficient | -0.349 | 3.147 | 4.895 | -8.042 | . . . . | -5.594 | 8.392 |

**EP 2 043 091 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP HEI5101398 B
- JP HEI11016208 B
- JP 2005038463 A
- JP 2004213720 A
- JP 2006120291 A
- US 2006087937 A1

### Non-patent literature cited in the description

- *Japanese Journal of Applied Physics,* 2004, vol. 43 (7B), 4983-4986